# FASCICULE DE BREVET EUROPEEN

(11) **EP 2 557 976 B1**
(45) Date de publication et mention de la délivrance du brevet: **21.05.2014**
(21) Numéro de dépôt: 11730367.7
(22) Date de dépôt: 12.04.2011
(51) Int. Cl.: A47J 45/06

(54) **POIGNÉE PIVOTANTE POUR RECIPIENT DE CUISSON COMPORTANT AU MOINS DEUX CLENCHES DE VERROUILLAGE**
SCHWENKGRIFF FÜR EIN KOCHGEFÄSS MIT MINDESTENS ZWEI VERRIEGELUNGEN
PIVOTING HANDLE FOR A COOKING VESSEL, COMPRISING AT LEAST TWO LOCKING LATCHES

(30) Priorité: 13.04.2010 FR 1052803
(43) Date de publication de la demande: 20.02.2013
(73) Titulaire: SEB S.A., 69130 Ecully (FR)
(72) Inventeur: RHETAT, Eric, F-21000 Dijon (FR); CARTIGNY, Michel, Pierre, F-21310 Mirebeau (FR)
(74) Mandataire: Martin, Didier Roland Valéry
(86) Numéro de dépôt international: PCT/FR2011/050835
(87) Numéro de publication internationale: WO 2011/128578

(56) Documents cités:
- EP-A1- 1 800 581
- FR-A1- 2 883 153
- US-B1- 6 173 860

## Description

### DOMAINE TECHNIQUE

La présente invention se rapporte au domaine technique général des récipients de cuisine de toutes sortes destinés à être utilisés pour la préparation ou la cuisson d'aliments, et plus particulièrement aux récipients pourvus d'une ou plusieurs poignées pivotantes susceptibles d'occuper alternativement une position de préhension et une position de repos destinée par exemple à faciliter le rangement du récipient.

La présente invention concerne plus particulièrement une poignée pivotante pour récipient de cuisine, ladite poignée comprenant une embase de fixation permettant de fixer ladite poignée sur la paroi du récipient, ainsi qu'un organe de préhension monté sur ladite embase de fixation de sorte à pouvoir basculer, sensiblement autour d'un axe de basculement (XX'), alternativement d'une première position angulaire de préhension, dans laquelle il permet à un utilisateur de manipuler le récipient, à une seconde position angulaire de repos distincte de la première position angulaire, et inversement, ladite poignée étant pourvue de moyens de retenue aptes à s'opposer au passage dudit organe de préhension de la première position angulaire à la seconde position angulaire.

La présente invention concerne également un récipient de cuisine pourvu d'une poignée pivotante conforme à l'invention.

### TECHNIQUE ANTERIEURE

Il est connu de doter les récipients de cuisine, et notamment les plats, faitouts, sauteuses, ou encore autocuiseurs, de poignées pivotantes, généralement disposées par paire de part et d'autre en saillie sur la paroi externe du récipient, lesdites poignées étant susceptibles d'occuper alternativement une position relevée, dans laquelle elles s'étendent sensiblement dans le prolongement radial du récipient, et une position de repos dans laquelle elles sont rabattues, généralement verticalement, afin de limiter l'encombrement du récipient et d'en faciliter ainsi le rangement.

Afin d'assurer la sécurité de l'utilisateur lors de la manipulation du récipient, il a également été prévu des moyens de verrouillage qui permettent de verrouiller la poignée lorsqu'elle se trouve dans sa position relevée, par exemple au moyen d'une languette élastique formant un cliquet à l'encontre d'une surface d'arrêt qui peut être ménagée sur l'embase ou sur l'anse de la poignée.

Bien qu'elles donnent généralement satisfaction, de telles poignées pivotantes peuvent toutefois souffrir de certains inconvénients.

En particulier, certains moyens de verrouillage connus peuvent présenter un risque de déverrouillage accidentel par l'utilisateur lors de la manipulation du récipient, ce qui est bien entendu préjudiciable à la sécurité dudit utilisateur.

Parfois, une certaine fragilité ou une trop grande complexité des composants de la poignée et du mécanisme de verrouillage peuvent également causer des défaillances susceptibles d'empêcher le verrouillage ou de compromettre la fiabilité de ce dernier.

En outre, les moyens de verrouillage connus peuvent parfois s'encrasser ou être détériorés par l'usage courant du récipient, et notamment par l'exposition aux débris d'aliments, à l'eau, aux effluves de cuisson, aux détergents ou encore aux chocs, ce qui peut compromettre leur fonctionnement et leur fiabilité.

Dans l'un et l'autre cas, de tels incidents peuvent parfois rendre le récipient inutilisable, sauf à opérer une réparation qui peut se révéler coûteuse au regard du prix du récipient neuf.

Par ailleurs, le mécanisme de verrouillage de certaines poignées connues peut se révéler relativement encombrant et disgracieux.

Enfin, l'agencement de certains moyens de verrouillage connus rend parfois leur manipulation malaisée, voire dangereuse pour l'utilisateur, en exposant par exemple ce dernier à un risque de pincement des doigts ou de la paume de la main.

Des poignées pivotantes selon l'art antérieur sont par exemple décrites dans les documents FR 2883153 A1 et EP 1800581.

### EXPOSE DE L'INVENTION

Les objets assignés à la présente invention visent par conséquent à remédier aux inconvénients susmentionnés et à proposer une nouvelle poignée pivotante de récipient de cuisine présentant une fiabilité et une longévité accrues.

Un autre objet assigné à l'invention vise à proposer une nouvelle poignée pivotante de conception particulièrement simple et compacte, dont la fabrication, l'assemblage ou la remise en état soient simples et peu onéreux.

Un autre objet assigné à l'invention vise à proposer une nouvelle poignée pivotante dont le fonctionnement soit particulièrement simple, intuitif et sûr.

Un autre objet assigné à l'invention vise à proposer une nouvelle poignée pivotante présentant une bonne finition et un aspect extérieur soigné.

Un autre objet assigné à l'invention vise à proposer une nouvelle poignée pivotante possédant un verrouillage renforcé, stable et équilibré dans sa position de service.

Un autre objet assigné à l'invention vise à proposer un nouveau récipient de cuisine robuste, fiable et compact, dont l'utilisation et la manipulation, et notamment le rangement, sont facilités, particulièrement intuitifs et sûrs.

Les objets assignés à l'invention sont atteints à l'aide d'une poignée pivotante pour récipient de cuisine, ladite poignée comprenant une embase de fixation permettant de fixer ladite poignée sur la paroi du récipient, ainsi qu'un organe de préhension monté sur ladite embase de fixation de sorte à pouvoir basculer, sensiblement autour d'un axe de basculement (XX'), alternativement d'une première position angulaire de préhension, dans laquelle il permet à un utilisateur de manipuler le récipient, à une seconde position angulaire de repos distincte de la première position angulaire, et inversement, ladite poignée étant pourvue de moyens de retenue aptes à s'opposer au passage dudit organe de préhension de la première position angulaire à la seconde position angulaire, ladite poignée étant caractérisée en ce que les moyens de retenue comportent au moins une première clenche et une seconde clenche conçues pour pouvoir se déplacer, respectivement selon une première trajectoire et une seconde trajectoire, entre d'une part une position d'engagement, dans laquelle elles viennent en appui respectivement contre une première face d'appui et une seconde face d'appui qui sont disposées l'une et/ou l'autre sensiblement latéralement par rapport à la première et à la seconde trajectoire respectivement, et à distance l'une de l'autre le long de l'axe de basculement (XX'), afin de s'opposer au déplacement de l'organe de préhension, et d'autre part une position de libération, dans laquelle elles libèrent lesdites première et seconde faces d'appui afin d'autoriser le déplacement de l'organe de préhension.

Les objets assignés à l'invention sont également atteints à l'aide d'un récipient de cuisine pourvu d'une poignée pivotante conforme à l'invention.

### DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue de dessus, un récipient de cuisine pourvu de deux poignées correspondant à une première variante de réalisation conforme à l'invention, l'une relevée en position de préhension et l'autre rabattue en position de repos.
- La figure 2 illustre, selon une vue latérale partielle en coupe, le récipient de cuisine représenté sur la figure 1.
- Les figures 3 et 4 illustrent, selon des vues en perspective partielle, respectivement éclatée et assemblée, l'assemblage sur un récipient de cuisine, en position de préhension, d'une poignée pivotante selon la première variante de réalisation correspondant à celle des figures 1 et 2.
- Les figures 5 et 6 illustrent, respectivement selon des vues en perspective et en coupe de côté, une seconde variante de réalisation de poignée conforme à l'invention, en position de préhension.
- La figure 7 illustre, selon une vue en perspective, une troisième variante de réalisation de poignée pivotante conforme à l'invention, rabattue en position de repos.
- La figure 8 illustre, selon une vue écorchée en perspective, une partie du mécanisme à double clenche formant les moyens de retenue de la poignée de la figure 7, cette dernière se trouvant en position de préhension.
- La figure 9 illustre, selon une vue latérale partielle en coupe, un récipient de cuisine pourvu de deux poignées pivotantes correspondant à la troisième variante de réalisation représentée sur les figures 7 et 8, la poignée gauche se trouvant en position de préhension, et celle de droite en position de repos.
- La figure 10 illustre, selon une vue de dessus en coupe, le récipient représenté sur la figure 9.
- La figure 11 représente, selon une vue en perspective, une quatrième variante de réalisation de poignée conforme à l'invention à verrouillage/déverrouillage automatique, lorsque ladite poignée se trouve en position de repos.
- La figure 12 illustre, selon une vue en perspective éclatée, l'assemblage sur un récipient de cuisine de la poignée représentée sur la figure 11.
- La figure 13 représente, selon une vue écorchée en perspective, les éléments de la figure 12 lorsque la poignée s'approche de sa position de préhension.

### MEILLEURE MANIERE DE REALISER L'INVENTION

La présente invention se rapporte à une poignée pivotante 1 de récipient 2 de cuisine, laquelle est bien entendu susceptible d'être adaptée sans restriction à de nombreux types de récipients destinés à la préparation, à la présentation ou à la cuisson des aliments, tels que plats, sauteuses, casseroles, marmites, faitouts, autocuiseurs, etc.

A cet effet, la poignée 1 comprend une embase de fixation 3 qui permet de la fixer sur la paroi 4 du récipient 2.

De préférence, l'embase 3 permettra la fixation de la poignée 1 au récipient 2 sans qu'il soit nécessaire de percer ni de traverser la paroi 4.

A ce titre, bien qu'il soit envisageable que ladite embase 3 soit venue de matière avec la paroi 4, ou irréversiblement fixée sur celle-ci, ladite embase 3 constituera de préférence une pièce rapportée, avantageusement assemblée sur la paroi 4 de façon démontable.

A cet effet, on pourra employer par exemple une vis de fixation 7 venant en prise dans une bride 8 filetée faisant saillie sur la paroi, et de préférence rapportée par exemple par soudage sur cette dernière, de sorte à plaquer ladite embase 3 contre ladite paroi 4.

Dans ce qui suit, on considérera de préférence que l'embase 3 forme un référentiel fixe.

Le récipient 2 pourra bien entendu être de forme quelconque, la paroi 4 pouvant notamment s'enrouler en suivant un contour fermé C autour d'un axe générateur, qui correspond de préférence à la direction verticale (ZZ') et pourra être assimilée à celle-ci dans ce qui suit, pour former sensiblement un cylindre dont la base, délimitant le fond du récipient, pourra être par exemple sensiblement circulaire, ovale, polygonale, etc.

Par ailleurs, la poignée comporte un organe de préhension 5, dont la forme n'est, bien entendu, nullement limitée, dès lors que ce dernier permet la saisie de la poignée en vue de la manipulation du récipient 2.

Ainsi, ledit organe de préhension 5 pourra notamment être formé par un manche, qui pourra être allongé et sensiblement rectiligne ou au contraire incurvé.

Préférentiellement, ledit organe de préhension 5 sera formé par une anse 6, présentant de préférence à ses extrémités 6A, 6B des renflements, par exemple sensiblement cylindriques, et avantageusement reliée par chacune desdites extrémités 6A, 6B à l'embase 3, de part et d'autre de cette dernière, tel que cela est illustré sur les figures, en dessinant un contour sensiblement fermé, par exemple annulaire ou ellipsoïde.

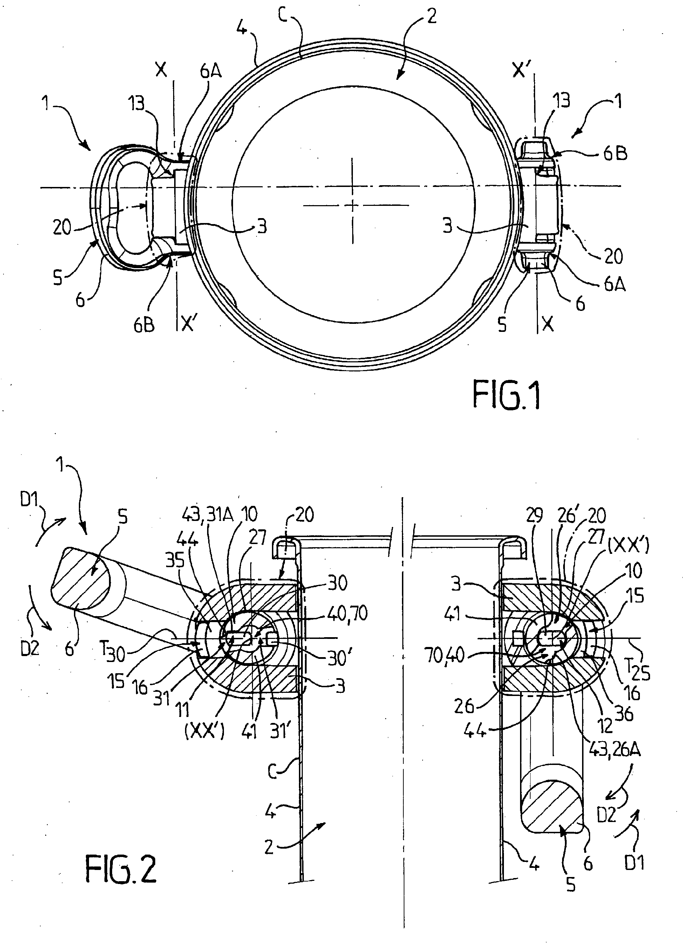

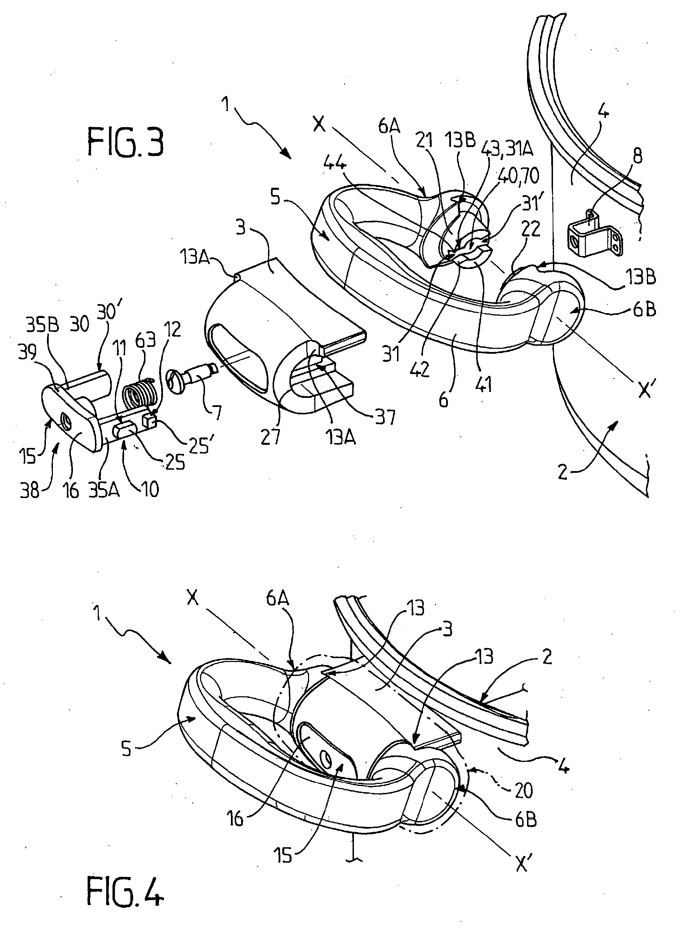

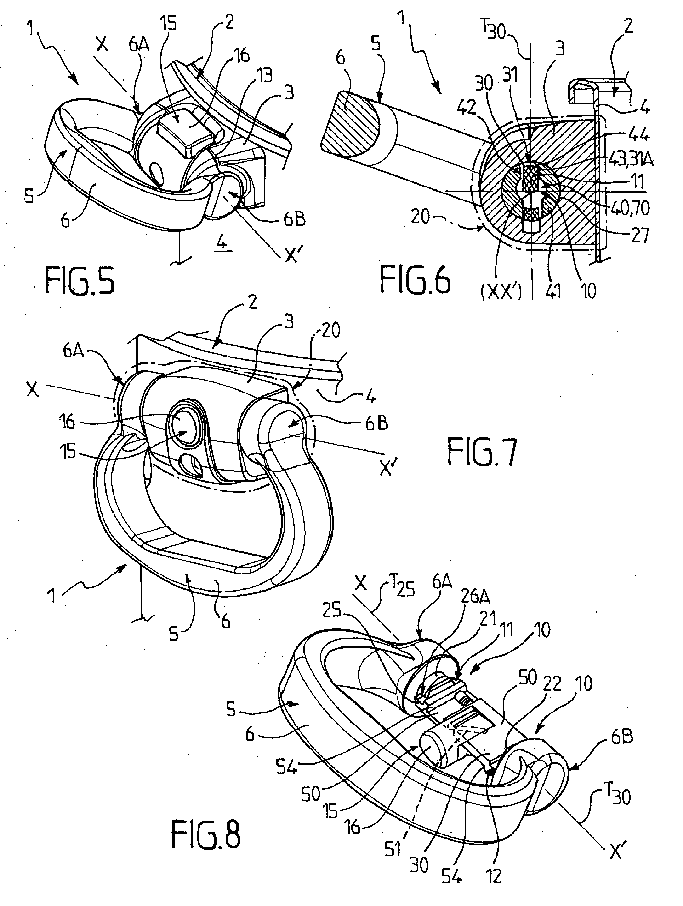

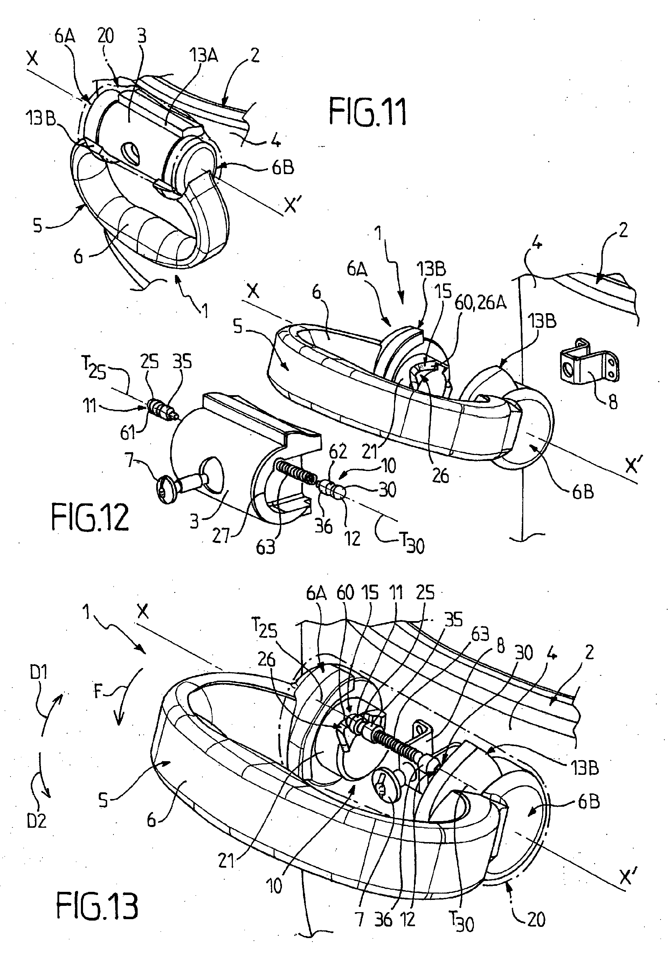

Selon l'invention, l'organe de préhension 5 est monté sur ladite embase de fixation 3 de sorte à pouvoir basculer, sensiblement autour d'un axe de basculement (XX'), alternativement d'une première position angulaire de préhension, tel que cela est illustré sur la partie gauche des figures 1,2, 9 et 10 ainsi que sur les figures 4, 5, et 6, première position dans laquelle il permet à un utilisateur de manipuler le récipient 2, à une seconde position angulaire de repos, distincte de la première position angulaire, et représentée notamment sur la partie droite des figures 1, 2, 9 et 10, ainsi que sur les figures 7 et 11.

Bien entendu, ce basculement sera avantageusement réversible, ledit organe de préhension 5 étant inversement apte à passer de la seconde position angulaire à la première lorsque la poignée 1 est convenablement actionnée par cet effet par l'utilisateur.

Bien entendu, l'invention n'est nullement limitée à une orientation particulière de basculement, pas plus qu'à des première et seconde positions angulaires spécifiques.

Toutefois, la première position angulaire de préhension correspondra de préférence à une position dans laquelle l'organe de préhension 5, et plus particulièrement l'anse 6 s'étend sensiblement suivant une direction radiale par rapport à l'axe générateur du récipient, tandis que la seconde position de repos correspondra sensiblement à une position non radiale.

A ce titre, il est envisageable que, selon une variante de réalisation non représentée, le basculement puisse s'opérer sensiblement autour d'un axe (XX') vertical, de telle sorte que la trajectoire de l'organe de préhension soit sensiblement contenue dans un plan horizontal, et que ledit organe de préhension puisse évoluer d'une première position où il se trouve sensiblement *« en drapeau »* orthogonalement à la paroi sensiblement parallèle à la direction verticale, jusqu'à une seconde position angulaire correspondant à une configuration dans laquelle l'organe de préhension 5 est rabattu de façon sensiblement tangentielle par rapport au contour C de la paroi 4.

Toutefois, ledit basculement s'opèrera de préférence sensiblement autour d'un axe (XX') sensiblement horizontal et de préférence sensiblement tangent au contour C, de telle sorte que lorsque l'organe de préhension 5 est placé dans sa position angulaire de repos, il pend sensiblement verticalement le long de la paroi 4, tandis que la première position angulaire correspond de préférence à une position dans laquelle l'anse 6 s'étend, depuis l'embase vers sa portion libre, sensiblement le long d'un plan horizontal ou légèrement ascendant, et par exemple selon une direction sensiblement comprise entre -10 degrés sous le plan horizontal et +20 degrés à +30 degrés au-dessus du plan horizontal.

Avantageusement, dans l'un et l'autre cas, le passage de la première à la seconde position angulaire permet de réduire l'encombrement hors-tout de la poignée 1, et plus globalement du récipient 2, ce qui facilite notamment la mise au lave-vaisselle ou encore le rangement de ce dernier.

Selon l'invention, la poignée 1 est également pourvue de moyens de retenue 10 aptes à s'opposer au passage dudit organe de préhension 5 de la première position angulaire de préhension vers, et en particulier jusqu'à, la seconde position angulaire de repos.

Avantageusement, lesdits moyens de retenue 14 évitent le basculement accidentel ou intempestif de l'organe de préhension 5 vers sa position de repos, ce qui permet une saisie et une manipulation du récipient faciles et sûres.

De préférence, les moyens de retenue 10 sont conçus pour maintenir sensiblement l'organe de préhension 5 dans sa première position angulaire, voire pour former des moyens anti-retour permettant de verrouiller ledit organe de préhension 5 par rapport à l'embase 3 dans sa première position angulaire, au moins à l'encontre du sens de déplacement allant de ladite première position angulaire vers la seconde position angulaire.

De préférence, lesdits moyens de retenue présentent au moins une portion active 11, 12 par l'intermédiaire de laquelle ils peuvent agir sur l'organe de préhension 5 afin de s'opposer à son passage de la première à la seconde position angulaire.

Avantageusement, la poignée 1 peut également comporter une butée d'arrêt 13 faisant obstacle au déplacement opposé de l'organe de préhension 5, c'est-à-dire allant de la seconde vers la première position angulaire, lorsque ledit organe de préhension 5 se trouve dans ladite première position angulaire.

En d'autres termes, ladite butée d'arrêt 13 permet avantageusement d'interrompre et de bloquer le mouvement dudit organe de préhension 5 lorsque celui-ci est relevé jusqu'à atteindre sa position de préhension.

Bien entendu, il est envisageable d'utiliser à cet effet tout système de came ou d'ergot permettant à l'organe de préhension 5 de venir en appui contre la paroi 4 ou le couvercle du récipient (non représenté).

Toutefois, ladite butée d'arrêt 13 sera de préférence formée, tel que cela est illustré sur les figures, au moyen d'un épaulement 13A ménagé dans l'embase 3 et contre lequel vient buter un élément saillant 13B de l'extrémité de l'anse 6 correspondante.

De préférence, l'organe de préhension 5 est porté par l'embase 3 au moyen d'au moins un tourillon 21, 22 qui permet le basculement dudit organe de préhension 5 en rotation, de la première à la seconde position angulaire.

Ainsi, ledit organe de préhension 5 est de préférence monté en liaison pivot captive avec l'embase 3, ledit au moins un tourillon 21, 22 matérialisant l'axe de basculement, et plus particulièrement de rotation, (XX') correspondant.

Bien entendu, l'agencement dudit tourillon 21 n'est nullement limité, ce dernier pouvant notamment, selon une variante de réalisation non représentée, être solidaire de l'embase 3, voire être venu de matière avec cette dernière de sorte à former des portées cylindriques sur les bords latéraux de celle-ci, tandis que les extrémités 6A, 6B de l'anse 6 présentent des paliers femelles tels que des canons aptes à venir s'enfiler à libre rotation autour desdites portées.

Toutefois, de façon particulièrement préférentielle, en raison notamment de la simplification des opérations de fabrication et de montage de l'anse 6 sur l'embase 3, et tel que cela est illustré sur les figures, le tourillon 21, 22 est solidaire du moyen de préhension 5, et de façon particulièrement préférentielle venu de matière avec ce dernier, le moyen de préhension 5 portant ainsi l'organe mâle de la liaison pivot.

Ainsi, l'anse 6 sera de préférence pourvue à chacune de ses extrémités 6A, 6B, soit d'un bossage destiné à former un tourillon 21, 22, soit éventuellement d'un fût destiné à accueillir un tel tourillon, par exemple par emmanchement.

Le tourillon 21, 22 pourra alors avantageusement être engagé et guidé dans un palier 27, de préférence lisse, ménagé dans l'embase 3.

Quel que soit le mode de réalisation envisagé, la poignée 1 pourra donc comprendre deux tourillons 21, 22 sensiblement coaxiaux et disposés de préférence de part et d'autre de l'embase.

Selon une caractéristique importante de l'invention, les moyens de retenue comportent au moins une première clenche 25 et une seconde clenche 30 qui sont conçues pour pouvoir se déplacer, respectivement selon une première trajectoire T₂₅ et une seconde trajectoire T₃₀, entre d'une part une position d'engagement, dans laquelle lesdites première et seconde clenches viennent en appui respectivement contre une première face d'appui 26A et une seconde face d'appui 31A, lesdites première et seconde face d'appui étant disposées l'une et/ou l'autre sensiblement latéralement par rapport à la première et à la seconde trajectoire T₂₅, T₃₀ respectivement, et à distance l'une de l'autre le long de l'axe de basculement (XX'), afin de s'opposer au déplacement de l'organe de préhension, et d'autre part une position de libération, dans laquelle lesdites clenches 25, 30 libèrent lesdites première et seconde faces d'appui 26A, 31A afin d'autoriser le déplacement de l'organe de préhension 5.

Avantageusement, les moyens de retenue 10 permettent ainsi de réaliser un verrouillage par contact entre des surfaces solides qui sont associées respectivement à l'embase et au moyen de préhension, à savoir la paroi latérale de la clenche et la face d'appui contre laquelle cette dernière vient buter.

La mise en oeuvre de faces d'appui s'étendant au moins en partie latéralement par rapport à leur clenche respective permet d'offrir à la clenche, lorsqu'elle s'engage le long de ladite face d'appui, et en quelque sorte lorsqu'elle glisse « *sous »* ladite face d'appui, un rebord d'appui non normal à sa trajectoire, et par conséquent apte à exercer à l'encontre de ladite clenche un effort de retenue comprenant au moins une composante sensiblement transverse à la trajectoire d'engagement/libération de ladite clenche, c'est-à-dire apte à former un obstacle latéral au mouvement de la clenche dans au moins une direction sensiblement transverse à ladite trajectoire. On obtient ainsi avantageusement un verrouillage particulièrement stable et solide.

A ce titre, la ou les faces d'appui 26A, 31 A s'étendent de préférence sensiblement selon un plan, et peuvent être soit sensiblement parallèles à la trajectoire T₂₅, T₃₀ de la clenche 25, 30 correspondante, tel que cela est le cas sur les première, seconde et troisième variantes de réalisation illustrées sur les figures 1 à 10, ou encore inclinées par rapport à la trajectoire de la clenche correspondante, le long de ladite trajectoire et de manière sensiblement sécante à cette dernière, et de préférence de façon convergente dans le sens de déplacement allant de la position de libération vers la position d'engagement, tel que cela est le cas au sein de la quatrième variante de réalisation illustrée sur les figures 11 à 13.

De surcroît, la répartition, et plus particulièrement l'étagement, des faces d'appui 26A, 31A, et par conséquent des zones de coopération entre lesdites faces d'appui 26A, 31A et les portions actives 11, 12 respectives de la première et de la seconde clenche 25, 30, en des abscisses différentes selon l'axe de basculement (XX'), au moins lorsque lesdites clenches se trouvent en position d'engagement, permet avantageusement d'obtenir un verrouillage « *multi-points* », en créant plusieurs zones de coopération distinctes, distantes les unes des autres.

On peut ainsi mieux répartit et équilibrer le verrouillage, et limiter de surcroît certains risques de coincement ou de grippage de la poignée.

En outre, la redondance des moyens de retenue, et plus particulièrement des clenches 25, 30 formant verrous, améliore la fiabilité du verrouillage, en particulier si chaque paire clenche/face d'appui, c'est-à-dire chaque zone de coopération, est susceptible de suffire à elle seule à assurer un verrouillage convenable.

Par ailleurs, les moyens de retenue 10 forment de préférence des moyens anti-retour automatiques, la première et/ou la seconde clenche 25, 30 étant agencée pour se déplacer spontanément en position d'engagement lorsque l'organe de préhension 5 est amené suffisamment près de, ou atteint sensiblement, sa première position angulaire de préhension.

A cet effet, la première et/ou la seconde clenche est de préférence sollicitée vers sa position d'engagement, directement ou indirectement, par un organe élastique 63, tel qu'un ressort hélicoïdal.

Préférentiellement, tel que cela est le cas pour l'ensemble des variantes illustrées sur les figures, ledit organe élastique 63 est commun aux deux clenches.

De façon particulièrement préférentielle, tel que cela est notamment le cas pour les troisième et quatrième variantes correspondant aux figures 8 à 10 et 11 à 13, l'organe élastique 63 commun est interposé, ici directement, entre la première et la seconde clenche, afin de les contraindre en écartement l'une à l'encontre de l'autre.

Par ailleurs, le tourillon 21, 22 présentera de préférence au moins un premier logement d'appui 26 conçu pour accueillir tout ou partie de la clenche mobile 25.

Bien entendu, l'agencement de la clenche 25 et du logement d'appui 26 ne sont nullement limités à une variante de réalisation particulière.

Ainsi, il est envisageable, selon une variante de réalisation non représentée, que le logement d'appui 26 creusé dans le tourillon 21, 22 puisse contenir la première clenche 25 entière, et soit destiné à être occupé en permanence par tout ou partie de la clenche 25. Le logement pourra alors accueillir l'organe élastique 63 de propulsion de ladite clenche pré-contraignant cette dernière, directement ou indirectement, dans le sens de son déploiement vers l'extérieur dudit logement d'appui 26, et plus particulièrement selon une direction radiale centrifuge, et apte à placer ladite clenche en saillie dudit tourillon.

Selon cette variante, le palier 27, solidaire de l'embase 3, pourra comprendre une empreinte présentant au moins une surface d'appui 26A et dans laquelle la clenche 25, et plus particulièrement la portion active 11 située à l'extrémité de cette dernière, peut s'introduire, lorsque l'organe de préhension 5 se trouve en position de préhension, afin de réaliser un pont reliant le tourillon au palier et bloquant par conséquent leur rotation relative, un peu à la manière d'une clavette.

Ainsi, le sous-ensemble formé par le tourillons 21 pourvu de sa clenche 25 pourrait constituer l'organe mâle des moyens de retenue 10.

Toutefois, selon une variante de réalisation préférentielle correspondant à l'ensemble des variantes illustrées sur les figures, le premier logement d'appui 26 forme une partie femelle dans laquelle la portion active 11 de la première clenche 25 pénètre pour s'opposer au mouvement de rotation de l'organe de préhension 5 par rapport à l'embase 3, et dont ladite portion active 11 se retire pour libérer ledit mouvement de rotation.

En d'autres termes, la première clenche 25 est de préférence logée initialement au sein de l'embase 3, et non pas du tourillon, tant que l'organe de préhension 5 ne se trouve pas dans sa première position angulaire de préhension, le logement d'appui 26, dont la paroi forme une face d'appui 26A, étant alors vide.

Ladite première clenche 25 est apte à se déplacer de manière captive et guidée, de préférence en translation, au sein de l'embase 3 pour venir engager, avantageusement spontanément, ledit premier logement d'appui 26, lorsque ce dernier se présente dans l'alignement de ladite première clenche 25, et ainsi voir son débattement latéral limité, voire interdit par la face d'appui 26A bordant ledit logement.

Bien entendu, la seconde clenche 30 mobile coopérera de préférence avec un second logement d'appui 31 de manière sensiblement analogue, les caractéristiques de la seconde clenche 30 et du second logement d'appui 31 se déduisant de préférence *mutatis mutandis* des caractéristiques de la première clenche et du premier logement d'appui.

Au sens de l'invention, il est nécessaire de manoeuvrer les clenches 25, 30 en retrait pour dégager les faces d'appui 26A, 31 A, et plus particulièrement extraire les portions actives 11, 12 desdites clenches des logements d'appui 26, 31, afin d'autoriser de nouveau la libre rotation du moyen de préhension 5 par rapport à l'embase 3.

Afin d'éviter tout mouvement intempestif de l'organe de préhension 5, les moyens de retenue 10 seront placés sous la dépendance d'un organe de commande 15 actionnable, et donc contrôlable, par l'utilisateur.

Selon une variante de réalisation correspondant aux figures 11 à 13 qui sera détaillée plus bas, ledit organe de commande 15 pourra, selon une caractéristique qui peut constituer une invention indépendante, être confondu avec l'organe de préhension 5, de sorte à autoriser le passage de la première position angulaire à la seconde position angulaire lorsqu'une manoeuvre de dégagement particulière est réalisée sur ledit organe de préhension, et, par exemple, lorsqu'un effort supérieur à un seuil prédéterminé est exercé par l'utilisateur sur ledit organe de préhension 5, et plus particulièrement imposé dans le sens de basculement, ici vers le bas.

Toutefois, de façon particulièrement préférentielle, et afin d'assurer une utilisation à la fois intuitive et présentant une sécurité optimale, l'organe de commande 15 sera distinct de l'organe de préhension 5, tel que cela est le cas sur les première, seconde et troisième variantes de réalisation. On pourra ainsi empêcher le déverrouillage intempestif de l'organe de préhension 5, ce dernier ne pouvant être libéré que par une action positive sur un organe de commande séparé.

En outre, ledit organe de commande 15 sera de préférence commun à la première et à la seconde clenche 25, 30, c'est-à-dire capable d'agir sur chacune desdites clenches, de préférence de façon simultanée, plus particulièrement pour les manoeuvrer en retrait depuis leur position d'engagement vers leur position de libération, cette caractéristique étant par ailleurs commune aux quatre variantes de réalisation illustrées sur les figures.

Ledit organe de commande 15 pourra notamment comprendre un bouton-poussoir 16, de préférence unique, de sorte à offrir une commande centralisée, ledit bouton étant avantageusement disposé pour être aisément accessible et manoeuvrable par l'utilisateur.

Avantageusement, ledit bouton-poussoir peut être rappelé par le même organe élastique 63 que celui qui sollicite les clenches.

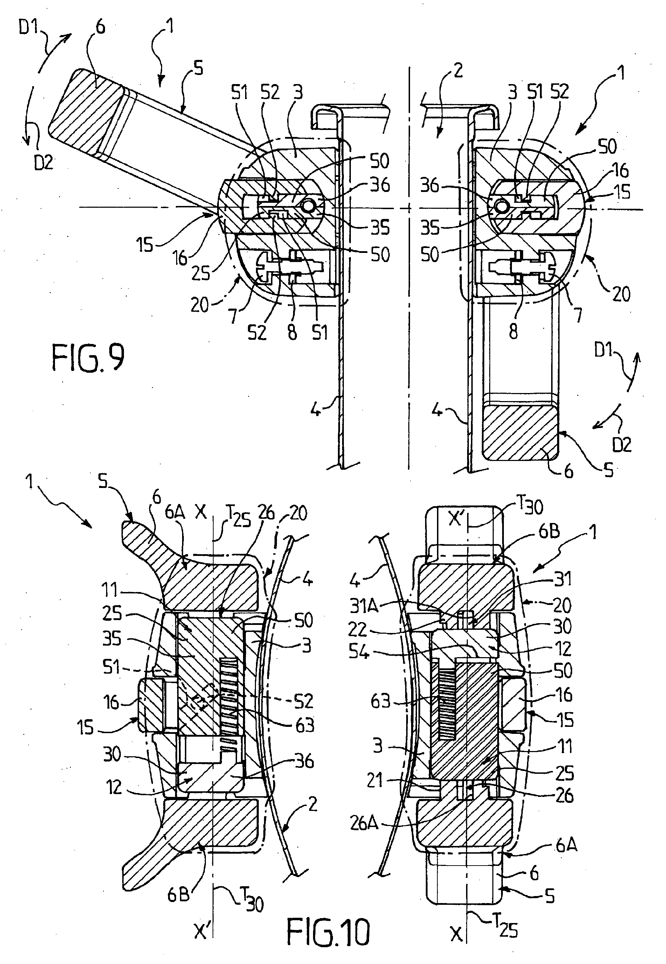

A ce titre, il est notamment envisageable que l'organe élastique 63 sollicite indirectement les clenches 25, 30, par l'intermédiaire dudit bouton- poussoir, au moyen d'un quelconque mécanisme de transmission voire de conversion de mouvement, tel qu'un doigt de manoeuvre 52 illustré sur les figures 9 et 10.

De préférence, la poignée pivotante 1 peut présenter un agencement sensiblement symétrique, et plus particulièrement une symétrie par rapport au plan sagittal sensiblement vertical et passant par l'axe générateur du récipient (ZZ'), agencement selon lequel chacun des deux tourillons 21, 22 coopère respectivement avec la première et la seconde clenche 25, 30 qui contrôle sa mobilité.

De préférence, la ou les clenches 25, 30 sont portées par, et notamment venues de matière avec, un ou plusieurs coulisseaux 35, 36 qui sont guidés à translation, de préférence par l'embase 3 et à l'intérieur de cette dernière.

Selon le cas, lesdits coulisseaux 35, 36 pourront être radiaux, c'est-à-dire guidés à translation selon une direction sensiblement transverse, voire perpendiculaire à l'axe (XX') du tourillon 21, 22, de sorte à permettre le déplacement radial de la clenche 25, 30 correspondante, tel que cela est notamment le cas sur les première et seconde variantes de réalisation illustrées aux figures 1 à 6.

A l'inverse, selon une caractéristique qui peut constituer une invention à part entière, le ou les coulisseaux 35 peuvent être axiaux c'est-à-dire guidés à translation selon une direction sensiblement parallèle, et plus particulièrement colinéaire, à l'axe (XX') du tourillon 21, 22, et préférentiellement de façon sensiblement coaxiale audit axe (XX'), tel que cela est le cas pour la troisième et la quatrième variante de réalisation illustrées sur les figures 7 à 13, dans lesquelles la ou les clenches sont animées d'un mouvement de verrouillage / déverrouillage de type axial sensiblement colinéaire à, voire sensiblement porté par, l'axe du tourillon (XX').

Ainsi, la première et/ou la seconde trajectoire T₂₅, T₃₀ peuvent être sensiblement colinéaires à l'axe de basculement (XX').

Par ailleurs, il est envisageable, quelle que soit leur orientation globale, que la première et la seconde trajectoire soient sensiblement parallèles.

Plus particulièrement, la première et la seconde clenche peuvent coopérer et se déplacer sensiblement dans la même direction, de préférence selon des trajectoires T₂₅, T₃₀ sensiblement parallèles voire coaxiales.

En particulier, il est envisageable que deux clenches soient jumelées et portées par un même coulisseau, tel que cela est le cas au sein de la première et de la seconde variante de réalisation illustrées sur les figures 1 à 6.

A l'inverse, selon une caractéristique qui peut constituer une invention en tant que telle, et notamment indépendamment de la configuration des faces d'appui ou de leur interaction avec les clenches, la première et la seconde clenche 25, 30 peuvent, pour passer de leur position de libération à leur position d'engagement, ou inversement, se déplacer, l'une par rapport à l'autre, selon des sens contraires, c'est-à-dire notamment opérer globalement un mouvement de rapprochement relatif, ou au contraire d'éloignement relatif.

Plus particulièrement, lesdites clenches 25, 30 peuvent être montées en opposition l'une par rapport à l'autre afin de se déplacer dans des directions sensiblement parallèles voire confondues mais dans des sens opposés, tel que cela est le cas au sein de la troisième et de la quatrième variante de réalisation illustrées sur les figures 7 â 10 et 11 à 13 respectivement.

A titre d'exemple, on constate en effet, en référence à la figure 8, que la première clenche 25 se déplace « *vers la gauche »* pour atteindre sa position de verrouillage au sein du premier tourillon 21, tandis que la seconde clenche 30 opère un déplacement *« vers la droite* », sensiblement *« en miroir* », pour parvenir au même effet avec le second tourillon 22.

Plus globalement, la première et la seconde clenches pourront constituer des entités cinématiques distinctes l'une de l'autre, éventuellement totalement séparées spatialement, et dont les déplacements pourront être, selon le cas, soit jumelés, tel que cela est le cas sur les première et seconde variantes de réalisation, soit couplés l'un à l'autre par un mécanisme commun plaçant le déplacement de la première clenche sous dépendance du déplacement de la seconde ou inversement, tel que cela est le cas sur la troisième variante, soit enfin totalement libres et indépendants l'un de l'autre, chacune des clenches étant susceptible d'adopter librement sa position d'engagement et/ou sa position de libération, quel que soit le comportement et la position de l'autre clenche, tel que cela est le cas au sein de la quatrième variante.

En outre, la première et la seconde trajectoire T₂₅, T₃₀ pourront être indifféremment sensiblement colinéaires, sensiblement parallèles, sécantes, convergentes ou divergentes.

Bien entendu, l'homme du métier sera libre de combiner l'une ou l'autre des caractéristiques susmentionnées, et par exemple de mettre en oeuvre au sein d'un même tourillon plusieurs clenches montées en opposition, voire en étoile, et destinées à jaillir en saillie sur la surface latérale externe dudit tourillon.

Toutefois, afin de limiter les efforts de miniaturisation nécessaires à la réalisation des moyens de retenue 10 et afin d'assurer un verrouillage fiable et sûr, la mise en oeuvre de clenches montées en opposition sera de préférence réservée à des configurations dans lesquelles les clenches sont mobiles axialement.

Selon une caractéristique préférentielle, le bouton poussoir 16 peut être situé sensiblement dans le prolongement du ou des coulisseaux 35, 36, et plus particulièrement dans le prolongement de la direction de déplacement desdits coulisseaux, et de façon particulièrement préférentielle venu de matière avec lesdits coulisseaux, de telle sorte que ledit bouton poussoir est agencé pour commander, avantageusement de façon directe, le déplacement dudit ou desdits coulisseaux 35.

De préférence, tel que cela est le cas sur la première et la seconde variante de réalisation, et selon une caractéristique qui peut constituer une invention en tant que telle, le tourillon 21, 22 possède un moyeu 40 évidé dans lequel au moins la portion active 11 de la première clenche 25, respectivement de la seconde clenche 30, peut s'escamoter afin d'autoriser la rotation du tourillon 21, 22 autour de la portion active 11 de ladite clenche 25, 30.

Avantageusement, ledit moyeu 40 offre un dégagement suffisamment spacieux pour accueillir au moins la portion active 11, 12 de la clenche 25, 30, voire la majorité sinon la totalité de ladite clenche, ce qui permet à cette dernière d'une part de se rétracter à l'intérieur dudit moyeu lorsque les moyens de retenue 10 se trouvent dans leur configuration de libération autorisant le mouvement rotatif de l'organe de préhension 5, puis de se redéployer ensuite lorsqu'il est nécessaire de verrouiller ledit organe de préhension 5 en position.

Ainsi, selon une caractéristique qui peut constituer une invention en tant que telle, le tourillon 21, 22 présente de préférence un logement de dégagement 70 à l'intérieur duquel la première clenche 25 peut se retirer, en opérant un transfert au moins partiel vers l'intérieur dudit logement de dégagement 70, afin de passer de sa position de verrouillage à sa position de libération.

De préférence les bords, et notamment les arêtes, de la première clenche 25 sont chanfreinés ou arrondis de sorte à venir s'inscrire dans ledit moyeu 40 sans faire obstacle à la rotation dudit moyeu autour de la clenche lorsque celle-ci se trouve en position rétractée, tel que cela est illustré sur la figure 2.

Selon une variante non représentée, le mouvement d'escamotage peut être sensiblement axial, le moyeu 40 formant sensiblement un manchon tubulaire à l'intérieur duquel la clenche peut se rétracter selon un mouvement sensiblement longitudinal et coaxial audit manchon.

Toutefois, ledit mouvement d'escamotage comporte de préférence au moins une composante radiale, voire est essentiellement radial, c'est à dire sensiblement transverse à l'axe de rotation (XX') du tourillon, et correspond ainsi sensiblement à un mouvement radial centripète au cours duquel la clenche passe de la périphérie du tourillon vers le centre de ce dernier.

De préférence, tel que cela est illustré sur les figures 2, 3 et 6, le moyeu 40 évidé est bordé par une jante 41 qui forme sensiblement un manchon tubulaire.

Avantageusement, cet agencement peut être obtenu en alésant axialement le tourillon 21, 22 à partir de son extrémité, de sorte à former un moyeu 40 évidé sensiblement cylindrique et borgne.

De façon préférentielle, le premier logement d'appui 26 est creusé dans l'épaisseur de la jante 41.

Bien que ledit logement d'appui 26 puisse être formé par une simple empreinte borgne creusée à partir de la face interne de la jante 41, ledit logement d'appui 26 est de préférence débouchant, c'est à dire qu'il traverse la paroi de la jante 41 de part en part, dans le sens de son épaisseur, selon une direction radiale.

A cet effet, ledit logement d'appui 26 est de préférence formé par une rainure longitudinale 42.

En outre, le moyeu 40 est de préférence ouvert sur l'extrémité du tourillon 21, la rainure longitudinale 42 fendant alors de préférence la jante 41 à l'extrémité dudit tourillon 21 selon une direction sensiblement parallèle à l'axe (XX') de rotation de ce dernier.

Selon cet agencement préférentiel, le chant 43 de la jante 41 qui forme la paroi du logement d'appui 26, et par conséquent la face d'appui 26A, présente, selon une caractéristique qui peut constituer une invention à part entière, une rampe de rattrapage de jeu 44.

Bien entendu, l'orientation de ladite rampe 44 sera définie en fonction de la direction de déplacement de la clenche 25, de telle sorte que la portion active 11 de cette dernière puisse s'engager et progresser sur ladite rampe 44, lors du verrouillage du moyen de préhension 5 en position, afin de compenser, à la manière d'un coin, les éventuels écarts dimensionnels liés à la fabrication et à l'assemblage de la poignée.

Plus particulièrement, tel que cela est illustré sur les figures 2, 3, 6, ladite rampe 44 pourra être sensiblement contenue dans un plan parallèle à l'axe de rotation (XX') du tourillon, et sécant à la direction radiale transverse audit axe, et plus particulièrement former une sorte de bec s'affinant vers la périphérie de la jante à partir de la surface d'arrêt formée par le chant 43 de ladite jante 41.

Selon la première et la seconde variante de réalisation, la première et la seconde clenches 25, 30 peuvent être formées par une première et une seconde protubérance portées par un même coulisseau 35, respectivement par une première et une seconde languettes 35A, 35B sensiblement parallèles et maintenues l'une à l'autre, à distance l'une de l'autre, par une traverse 39, l'organe de préhension 5 présentant au moins un premier et un second tourillon 21, 22 sensiblement coaxiaux par lesquels il s'articule sur l'embase 3, et lesdits tourillons présentent chacun d'une part un moyeu 40 évidé ménageant un logement de dégagement 70 dans lequel la première clenche 25, respectivement la seconde clenche 30, peut s'escamoter en position de libération, et d'autre part une jante 41 bordant ledit moyeu 40 et dans l'épaisseur de laquelle est creusé un logement d'appui 26, 31 offrant une surface d'appui 26A, 31A à la clenche correspondante lorsque celle-ci s'y introduit en position d'engagement.

Ainsi, selon une caractéristique commune aux premières et secondes variantes de réalisation, la première et/ou la seconde trajectoire T₂₅, T₃₀ peuvent être sensiblement transverses, et plus particulièrement sensiblement radiales, par rapport à l'axe de basculement (XX').

Par ailleurs, il est remarquable que les première et seconde variantes de réalisation, illustrées sur les figures 1 à 6 facilitent avantageusement le montage de la poignée 1.

En effet, avant de rapporter l'embase 3 sur le récipient 2, il est possible d'introduire le coulisseau 35 dans ladite embase en le repoussant à fond, en position de libération, puis de présenter l'anse à l'arrière de l'embase 3, en vis-à-vis de la paroi destinée à venir en appui contre la paroi 4 du récipient, ladite anse étant renversée, c'est-à-dire pivotée sensiblement d'un demi-tour par rapport à sa position de préhension.

Ainsi, le décrochement 13B de la butée 13 ne fait pas obstacle à l'insertion des tourillons 21, 22 qui peuvent être glissés, depuis l'arrière vers l'avant de l'embase, le long du palier 27, jusqu'à venir en butée contre le fond de ce dernier.

La rainure 42, du fait qu'elle traverse diamétralement la jante 41, permet aux verrous 25, 30 de traverser ladite jante 41 jusqu'à ce que le premier verrou 25 se trouve au centre du moyeu 40.

Il est alors possible de faire pivoter la poignée d'environ un demi-tour (dans le sens des aiguilles d'une montre sur les figures 3 et 4), pour l'amener dans l'une ou l'autre de ses première et seconde positions angulaires fonctionnelles.

Selon une caractéristique qui peut constituer une invention à part entière, la poignée peut comporter une troisième clenche 25', respectivement une quatrième clenche 30', agencées de sorte à pouvoir opérer simultanément, avec la première clenche 25, respectivement la seconde clenche 30, un verrouillage dans deux logements d'appui 26, 26', 31, 31' distincts, et notamment diamétralement opposés, situés au niveau du même tourillon 21, et plus particulièrement de la même jante 41.

Plus particulièrement, tel que cela est illustré sur les figures 2 et 3, un même coulisseau 35, et plus particulièrement une même première languette 35A peut être disposé sensiblement en bout du tourillon 21, 22, à distance ou accolé à ce dernier, et selon une direction sensiblement transverse à son axe (XX'), ledit coulisseau portant la première et la troisième clenche 25, 25' formées respectivement par une première et une seconde protubérance qui font saillie transversalement sur ledit coulisseau, à distance l'une de l'autre, selon une direction sensiblement parallèle à l'axe (XX') du tourillon 21, la jante 41 étant quant à elle fendue de part en part de sorte à former un premier et un troisième logement d'appui 26, 26' diamétralement opposés afin que le déplacement du coulisseau provoque l'engagement simultané de la première et de la troisième clenches 25, 25' dans le premier et le troisième logement d'appui 26, 26', respectivement le dégagement simultané desdites clenches de leurs logements d'appui.

Avantageusement, les dimensions de la première protubérance sont telles qu'elle peut s'inscrire dans le moyeu évidé 40, le tourillon venant sensiblement coiffer ladite première clenche. L'espace ménagé entre la première et la seconde protubérance, sur la face du coulisseau, permet quant à lui à la jante 41 entourant la première clenche 25 de se déplacer librement en rotation entre lesdites protubérances lorsque les clenches 25, 25' sont rétractées pour autoriser la libre rotation de l'organe de prévention 5.

Avantageusement, un tel agencement permet de multiplier les points de verrouillage de part et d'autre de l'axe de rotation de chaque tourillon 21, 22, et donc de l'organe de préhension 5, ce qui confère à l'ensemble une grande robustesse et une excellente fiabilité en limitant considérablement les risques de défaillance.

De surcroît, la redondance des appuis garantit une très bonne stabilité au moyen de préhension 5 lorsque celui-ci se trouve dans sa première position angulaire de préhension.

De façon préférentielle, la poignée présentant un agencement sensiblement symétrique, la structure à double clenche décrite ci-dessus se retrouve sensiblement à l'identique aussi bien en regard du premier tourillon 21, situé à gauche sur les figures 4 ou 5, qu'au niveau du second tourillon 22 situé à droite du plan sagittal sur la même figure.

Bien entendu, les caractéristiques de la seconde et de la quatrième clenche 30, 30', ainsi que celles du second et du quatrième logement d'appui 31, 31' peuvent se déduire *mutatis mutandis.*

On peut ainsi obtenir un mécanisme de verrouillage à quatre clenches, particulièrement stable et équilibré.

Avantageusement, tel que cela est bien visible sur la figure 3, le coulisseau 35 peut comporter deux languettes 35A, 35B qui portent chacune une paire de clenches 25, 25', 30, 30' coopérant avec l'un des tourillons et qui sont guidées par coulissement contre des rails 37 ménagés dans l'embase 3 et solidaires de cette dernière, lesdites languettes 35A, 35B formant les deux branches latérales d'un tiroir 38 en U, dont la traverse 39 de base forme une entretoise qui peut avantageusement supporter le bouton poussoir 16.

De préférence, le bouton poussoir 16 et la traverse 39 occupent avantageusement une position centrale sur l'embase 3, sensiblement entre les deux tourillons 21, 22, le bouton 16 pouvant avantageusement apparaître, de manière affleurante ou saillante, à travers une fenêtre de forme sensiblement conjuguée, découpée dans la face frontale de ladite embase.

Avantageusement, un tel agencement procure audit bouton-poussoir 16 un guidage lui assurant une bonne stabilité et une bonne fluidité de manoeuvre, et offre de surcroît à l'utilisateur une large surface de pression qui peut s'étendre sur la majeure partie de la largeur frontale de l'embase et qui facilite l'utilisation dudit bouton.

De façon particulièrement avantageuse, selon l'ergonomie que l'on souhaite conférer à la poignée 1, et plus particulièrement selon l'agencement que l'on souhaite conférer au bouton poussoir 16, le mécanisme décrit ci-dessus peut être mis en oeuvre selon une direction sensiblement radiale et horizontale, tel que cela est le cas pour la première variante de réalisation représentée sur les figures 1 à 4, ou au contraire selon une direction sensiblement verticale, tel que cela est le cas pour la seconde variante de réalisation représentée sur les figures 5 et 6.

Selon la troisième variante de réalisation illustrée sur les figures 7 à 10, la première clenche 25 et la seconde clenche 30 peuvent avantageusement être formées par des lames 50, de préférence sensiblement parallélépipédiques, superposées en appui-plan glissant l'une contre l'autre, et préférentiellement montées en opposition.

Ainsi, les extrémités desdites lames 50, formant les parties actives 11, 12 des premières et seconde clenches 25, 30, peuvent venir s'insérer dans un logement d'appui 26, 31 qui peut être avantageusement formé par une rainure ouverte à l'extrémité du tourillon 21, 22 correspondant, c'est-à-dire venir en appui contre une face d'appui 26A, 31A qui s'étend sensiblement dans un plan parallèle à leur trajectoire T₂₅, T₃₀, et ici à l'axe (XX').

Selon un mode de réalisation particulier non représenté, chaque tourillon peut être pourvu de deux logements d'appui suivant des directions sécantes et formant globalement, par exemple, une empreinte sensiblement cruciforme qui permet aux clenches 25, 30 de verrouiller l'organe de préhension 5 en position aussi bien dans sa première position angulaire de préhension, que dans sa seconde position angulaire de repos.

De préférence, selon une caractéristique qui peut constituer une invention en tant que telle, l'organe de commande 15 correspondant comprend un bouton poussoir 16 unique qui se déplace sensiblement selon une direction transverse à celle du déplacement de l'une et/ou l'autre desdites clenches, c'est-à-dire sensiblement transverse à la première etlou à la seconde trajectoire T₂₅, T₃₀, et qui commande le déplacement antagoniste simultané desdites première et seconde clenches.

Plus particulièrement, ledit bouton-poussoir suit de préférence une trajectoire sensiblement radiale par rapport au récipient 2 et à l'axe du tourillon 21, 22, tandis que les clenches se déplacent selon une direction sensiblement parallèle audit axe (XX') du tourillon 21, 22, voire confondue avec ce dernier.

De préférence, chaque lame 50 est pourvue d'une rainure 51 oblique, et de préférence sensiblement rectiligne, formant une double rampe qui permet à un doigt de manoeuvre 52 solidaire du bouton poussoir 16 de convertir l'enfoncement, respectivement le retour, dudit bouton poussoir 16 en un mouvement de translation tendant à rétracter, respectivement à déployer les portions actives 11, 12 des clenches 25, 30.

De surcroît, chaque lame 50 pourra être pourvue d'une butée de recul 54 destinée à limiter l'amplitude du mouvement de rapprochement relatif des deux clenches 25, 30 opposées lorsque l'utifisateur rétracte ces dernières.

Par ailleurs, selon une caractéristique qui peut constituer une invention à part entière, et qui est notamment mise en oeuvre au sein de la quatrième variante illustrée sur les figures 11 à 13, le logement d'appui 26, 31 peut présenter une rampe de réarmement 60 qui est commandée par l'organe de préhension 5 lui-même, de préférence de façon directe, et qui permet de repousser la clenche 25, 30 correspondante pour autoriser le passage de la première position angulaire à la seconde lorsqu'un effort F supérieur à un seuil prédéterminé est exercé sur ledit organe de préhension 5.

De façon préférentielle, cette rampe de réarmement 60 est réalisée au moyen d'un logement d'appui 26, 31 formant une encoche en « V » taillée à la périphérie du tourillon 21, 22, tel que cela est notamment visible sur les figures 16 et 17.

Plus particulièrement, la première et/ou la seconde face d'appui 26A, 31A formant les parois des logements d'appui 26, 31 peuvent être incinées par rapport à la trajectoire T₂₅, T₃₀ de la première, respectivement de la seconde clenche 25, 30, de sorte à former lesdites rampes de réarmement 60.

Avantageusement, une telle disposition constructive permet d'obtenir un verrouillage automatique de la poignée, lequel est néanmoins réversible sans qu'il soit nécessaire d'actionner un organe de commande distinct de l'organe de préhension 5, ce qui simplifie encore davantage la conception de la poignée 1 ainsi que son utilisation.

En outre, un tel système de réarmement intégré permet avantageusement de limiter les risques de casse de la poignée, et plus particulièrement du mécanisme formant les moyens de retenue 10, lorsque l'anse 6 se trouve en position de préhension et qu'elle subit un choc, ce dernier pouvant en effet être absorbé par un simple basculement de ladite anse.

Enfin, il est remarquable qu'une telle disposition permet, selon ce qui constitue une invention à part entière, a la fois d'obtenir un déplacement de la première clenche 25 indépendant de celui de la seconde clenche 30, de telle sorte, par exemple, que la défaillance éventuelle de l'une des clenches n'affecte pas le bon fonctionnement de l'autre clenche, mais également de contrôler le fonctionnement de l'ensemble desdites clenches, et plus particulièrement leur retrait et leur passage en position de libération, au moyen d'un organe de commande 15 unique, ce qui améliore l'ergonomie et la simplicité d'utilisation de la poignée.

Une telle variante de réalisation cumule donc la commodité d'une commande de déverrouillage centralisée et la sécurité accrue conférée par un verrouillage multi-points indépendant.

Les clenches 25, 30 pourront par ailleurs être formées par des pions 61, 62 sensiblement cylindriques et avantageusement montés en opposition aux deux extrémités d'un même organe de précontrainte élastique 63, tel qu'un ressort hélicoïdal, ce qui permet ainsi auxdits pions 61, 62 d'être plaqués contre la surface du tourillon et d'en suivre le relief, et plus particulièrement de réaliser un encliquetage automatique dans les encoches formant les logements d'appui.

De façon particulièrement avantageuse, tel que cela est visible sur la figure 12, il est possible de ménager de manière similaire, une pluralité d'encoches dans chaque tourillon, réparties à distance l'une de l'autre et marquées en creux sur le pourtour dudit tourillon, de sorte à indexer une pluralité de positions angulaires, notamment aussi bien la première position angulaire de préhension que la seconde position angulaire de repos, et plus préférentiellement pour permettre un verrouillage stable de l'organe de préhension dans chacune desdites positions angulaires.

Bien entendu, l'invention n'est nullement limitée aux variantes de réalisation décrites précédemment, les enseignements contenus dans ce qui précède étant notamment susceptibles d'être isolés et mis en oeuvre indépendamment les uns des autres ou combinés les uns avec les autres.

Par ailleurs, selon une caractéristique préférentielle, il est remarquable que l'organe de préhension 5 et/ou l'embase 3 définissent une enveloppe de protection 20 à l'intérieur de laquelle la portion active 11, 12 des moyens de retenue 10, et plus particulièrement des verrous 25, 30 reste contenue quelle que soit la première ou la seconde position angulaire occupée par l'organe de préhension 5, que l'organe de préhension 5 occupe la première position angulaire, la seconde position angulaire, où bien même toute position intermédiaire comprise entre lesdites première et seconde positions angulaires.

Avantageusement, une telle enveloppe de protection 20, qui est suggérée en traits mixtes sur les figures, permet de maintenir sensiblement la portion active 11, 12 à l'abri de l'environnement de la poignée, à l'intérieur du volume occupé et délimité par les surfaces externe de l'organe de préhension 5, de l'embase 3 ou de la combinaison de ces derniers.

Avantageusement, un tel agencement permet de préserver l'intégrité de la portion active 11, 12, sur laquelle repose l'efficacité et la fiabilité du maintien de l'organe de préhension 5 dans sa première position angulaire de préhension, et par conséquent, plus globalement, le bon fonctionnement des moyens de retenue 10.

Il permet de surcroît de limiter les risques de mauvaise manipulation ou de blessure par coupure ou pincement au contact de ladite portion active 11, 12 ou des moyens de retenue 10, dans la mesure où ladite enveloppe restreint l'accès de l'utilisateur à ces organes voire le rend impossible.

Bien entendu, l'agencement de l'enveloppe de protection 20, et par conséquent celui de l'organe de préhension 5, de l'embase 3, et de la jonction qui s'opère entre eux, pourront être adaptés en fonction du degré de protection souhaité et de la nature des éléments extérieurs, tels que des poussières, des projections d'eau, de matière grasse ou d'aliments, des effluves de cuisson, détergents employés pour nettoyer le récipient 2, dont on souhaite protéger, sinon isoler la portion active 11, voire l'intégralité des moyens de retenue 10.

En particulier, pour parfaire l'enveloppe de protection 20 au point de constituer une barrière sensiblement voire totalement étanche à l'un et/ou l'autre des éléments extérieurs susmentionnés, il est envisageable de prévoir des garnitures d'étanchéité, telles que des joints plats ou toriques, entre la paroi 4 et l'embase 3, et/ou au niveau des liaisons de l'embase 3 avec les différents organes de la poignée 1, notamment ceux présentant une mobilité par rapport à ladite embase 3.

De façon préférentielle, tel que cela est illustré sur les figures, la portion active 11, et plus globalement les moyens de retenue 10, seront intégralement dissimulés et recouverts par l'organe de préhension 5 et l'embase 3, de préférence par des parois pleines et continues de ces derniers, ce qui, au-delà de l'effet protecteur, améliore la finition et le rendu esthétique de la poignée.

En outre, le bouton poussoir 16 constituant de préférence le seul organe visible et actionnable par l'utilisateur, hormis l'organe de préhension 5 lui-même, l'utilisation de la poignée 1 conforme à l'invention est particulièrement intuitive et sûre.

Par ailleurs, il est remarquable que l'enveloppe de protection 20 peut avantageusement procurer une protection de nature thermique, l'embase 3 formant en particulier un rempart isolant par rapport à la paroi chaude du récipient, ce qui permet d'utiliser, pour former tout ou partie des moyens de retenue 10, des matériaux qui ne sont pas nécessairement résistants aux fortes chaleurs et qui peuvent être meilleur marché.

Bien entendu, l'invention concerne bien entendu un récipient de cuisine 2 en tant que tel, ledit récipient étant pourvu d'au moins une poignée pivotante, et de préférence de deux poignées pivotantes conformes à l'invention et présentant tout ou partie des caractéristiques décrites ci-dessus.

De façon particulièrement préférentielle, ledit récipient 2 constituera un appareil de cuisson d'aliments sous pression, du genre autocuiseur domestique, dont les poignées pivotantes seront fixées à l'extérieur de la paroi 4, sans porter atteinte à l'intégrité, et plus particulièrement à l'étanchéité, de l'enceinte de cuisson délimitée par ladite paroi 4.

Le fonctionnement d'une poignée pivotante 1 associée à un récipient 2 conforme à l'invention va maintenant être décrit en référence préférentielle d'une part à la première variante de réalisation représentée sur la figure 2, et d'autre part à la troisième variante de réalisation illustrée sur la figure 9.

Initialement, le récipient 2 se présente avec ses poignées 1 rabattues vers le bas, l'organe de préhension 5 occupant la seconde position angulaire de repos, tel que cela est illustré sur la partie droite des figures 2 et 9.

Sur la première variante, la première et la seconde clenche 25, 30 sont contenues dans le moyeu 40 de leur tourillon respectif, et sensiblement immobilisées entre les deux secteurs angulaires pleins de la jante 41.

Au sein de la troisième variante, les lames 50 butent contre les zones pleines des faces verticales des tourillons, normales à l'axe (XX').

L'anse 6 est donc libre de basculer vers la première position angulaire, dans un premier sens D1, de telle sorte que l'utilisateur peut saisir l'organe de préhension 5 et lui faire décrire une trajectoire ascendante en arc de cercle autour de l'embase 3, selon le sens D1.

Ce mouvement ascendant est avantageusement interrompu par la butée d'arrêt 13, lorsque les éléments saillant 13B des extrémités de l'anse 6 rencontrent les épaulements 13A ménagés dans l'embase 3, dans une position qui correspond de préférence à la première position angulaire de préhension.

Au cours de ce mouvement, l'anse 6 entraîne solidairement les tourillons 21, 22 formés à ses extrémités 6A, 6B, de telle sorte qu'elle amène progressivement le premier et le second logement d'appui 26, 31 en vis-à-vis de la direction de déplacement de la première et de la seconde clenche 25, 30.

Au sein de la première variante, la jante 41 s'efface ainsi peu à peu jusqu'à ce que lesdits logements d'appui 26, 31 se placent sensiblement dans l'alignement des languettes 35A, 35B et de leur rail 37 respectif, en ouvrant ainsi un passage suffisant pour libérer le mouvement des clenches.

Sous l'effet de la pression exercée par l'organe de précontrainte élastique 63, le coulisseau 35, est propulsé radialement vers l'extérieur de l'embase, la traverse 39 se comportant comme une barre d'attelage qui entraîne à sa suite les languettes.

Les clenches sont ainsi projetées selon un mouvement de translation qui les amène, par paire à l'intérieur de leur logement d'appui respectif.

On obtient ainsi, par un mouvement d'engagement « tout ou rien », un double, et même un quadruple verrouillage particulièrement sûr.

Au sein de la troisième variante, la rotation simultanée des fentes diamétrales formant le logement d'appui de chaque tourillon amène lesdits logements d'appui en vis-à-vis des lames, en coïncidence angulaire avec ces dernières, de telle sorte que lesdites lames s'y engagent en s'écartant axialement l'une de l'autre sous l'effet du ressort 63, et en repoussant au passage le bouton-poussoir 16 vers l'avant et l'extérieur de l'embase 3, par l'intermédiaire des rampes 51 agissant sur les doigts de manoeuvre 52.

Avantageusement, les portions actives 11 et 12 des clenches pénètrent dans les logements d'appui, et plus particulièrement attaquent les parois des logements d'appui formant face d'appui 26A, 31A, en venant par exemple en contact surfacique contre le chant 43 de la jante 41, ce qui empêche tout mouvement de retour spontané, et même forcé, de l'organe de préhension 5 dans le sens de rotation opposé.

De préférence, l'encliquetage de la clenche dans son logement d'appui produit un déclic sonore qui signale à l'utilisateur que la poignée à atteint la position voulue et que le verrouillage est opérationnel.

De surcroît, le déplacement nécessaire au verrouillage fait de préférence jaillir la tête du bouton 16 en saillie bien visible par rapport à la surface externe de l'embase 3, ce qui fournit à l'utilisateur une indication visuelle du déclenchement des moyens de retenue 10.

En outre, au sein de la première variante, chaque coulisseau 35 poursuit sa course jusqu'à ce que la première clenche 25 s'engage sur la rampe de rattrapage de jeu 44, ce qui permet d'accentuer légèrement la rotation de l'organe de préhension 5 dans le premier sens D1 de manière à le plaquer à la fois contre la première clenche 25 et la butée d'arrêt 13, de manière sensiblement serrée et sans jeu, en verrouillant ainsi l'organe de préhension 5 à l'encontre de tout déplacement dans le premier sens D1 et le second sens D2 opposé.

La poignée 1 se trouve alors verrouillée dans sa configuration redressée, illustrée notamment sur la partie gauche des figures 2 et 9, laquelle permet la préhension et la manipulation sans risques du récipient 2.

Une fois le récipient 2 utilisé et/ou nettoyé, l'utilisateur peut rabattre la ou les poignées 1 de manière à faciliter par exemple sa mise en place dans un lave-vaisselle ou son rangement.

Pour ce faire, il enfonce le bouton-poussoir 16 à l'encontre de l'organe de précontrainte élastique 63, ce qui a pour effet de manoeuvrer en retrait les clenches 25, 30 en les extrayant progressivement de leur logement d'appui 26, 31 jusqu'à ce qu'elles soient suffisamment dégagées latéralement de leurs surfaces d'appui respectives 26A, 31A pour pouvoir franchir ces dernières.

Une fois les clenches 25, 30 dégagées de leur logement d'appui respectif, et plus particulièrement une fois la première clenche 25 escamotée à l'intérieur du moyeu 40, aucun obstacle ne s'oppose à la rotation de la jante 41 et par conséquent du tourillon 21, dans le second sens D2, de telle sorte que l'utilisateur peut replier l'organe de préhension 25 par rotation descendante autour de l'embase 3, selon une trajectoire sensiblement inverse de la première.

Ainsi, la poignée conforme à l'invention permet de conférer une excellente ergonomie à tout type de récipient 2 de cuisine, tout en assurant une manipulation fiable et sûre dudit récipient.

En outre, de telles poignées présentent un excellent niveau de finition, un fonctionnement particulièrement intuitif, reproductible et durable.

Par ailleurs, la protection conférée par l'enveloppe de protection 20 conforme à l'invention permet non seulement de préserver le mécanisme des moyens de retenue 10, et plus globalement le mécanisme de la poignée 1 dans son ensemble, des agressions extérieures, mais également de protéger l'utilisateur, et plus particulièrement ses doigts, des parties mobiles des moyens de retenue 10.

Par ailleurs, la mise en oeuvre au sein d'une telle poignée d'un nombre réduit de pièces mécaniques, de formes relativement simples, permet de réduire significativement les coûts et les temps de fabrication et d'assemblage.

### POSSIBILITE D'APPLICATION INDUSTRIELLE

La présente invention trouve notamment son application industrielle dans la conception et la fabrication de récipients de cuisson.

## Revendications

1. Poignée pivotante (1) pour récipient (2) de cuisine, ladite poignée (1) comprenant une embase de fixation (3) permettant de fixer ladite poignée sur la paroi (4) du récipient (2), ainsi qu'un organe de préhension (5) monté sur ladite embase de fixation de sorte à pouvoir basculer, sensiblement autour d'un axe de basculement (XX'), alternativement d'une première position angulaire de préhension, dans laquelle il permet à un utilisateur de manipuler le récipient, à une seconde position angulaire de repos distincte de la première position angulaire, et inversement, ladite poignée étant pourvue de moyens de retenue (10) aptes à s'opposer au passage dudit organe de préhension (5) de la première position angulaire à la seconde position angulaire, ladite poignée (1) étant **caractérisée en ce que** les moyens de retenue comportent au moins une première clenche (25) et une seconde clenche (30) conçues pour pouvoir se déplacer, respectivement selon une première trajectoire (T₂₅) et une seconde trajectoire (T₃₀), entre d'une part une position d'engagement, dans laquelle elles viennent en appui respectivement contre une première face d'appui (26A) et une seconde face d'appui (31A) qui sont disposées l'une et/ou l'autre sensiblement latéralement par rapport à la première et à la seconde trajectoire (T₂₅, T₃₀) respectivement, et à distance l'une de l'autre le long de l'axe de basculement (XX'), afin de s'opposer au déplacement de l'organe de préhension, et d'autre part une position de libération, dans laquelle lesdites clenches (25, 30) libèrent lesdites première et seconde faces d'appui (26A, 31A) afin d'autoriser le déplacement de l'organe de préhension.

2. Poignée pivotante selon la revendication 1 **caractérisée en ce que**, pour passer de leur position de libération à leur position d'engagement, ou inversement, la première clenche (25) et la seconde clenche (30) se déplacent, l'une par rapport à l'autre, selon des sens contraires.

3. Poignée pivotante selon la revendication 2 **caractérisée en ce que** la première trajectoire et la seconde trajectoire (T₂₅, T₃₀) sont sensiblement parallèles, la première clenche (25) et la seconde clenche (30) étant montées en opposition l'une par rapport à l'autre.

4. Poignée pivotante selon la revendication 3 **caractérisée en ce que** la première et la seconde clenche (25, 30) sont sollicitées vers leur position d'engagement par un organe élastique (63) commun interposé entre la première et la seconde clenche (25, 30) afin de les contraindre en écartement l'une à l'encontre de l'autre.

5. Poignée pivotante selon l'une des revendications précédentes **caractérisée en ce que** l'organe de préhension (5) est formé par une anse (6) reliée par chacune desdites extrémités (6A, 6B) à l'embase (3), de part et d'autre de cette dernière.

6. Poignée pivotante selon l'une des revendications précédentes **caractérisée en ce que** l'organe de préhension (5) est porté par l'embase (3) au moyen d'au moins un tourillon (21, 22) qui permet le basculement dudit organe de préhension (5) en rotation, ledit tourillon (21, 22) étant solidaire dudit moyen de préhension (5) et de façon préférentielle venu de matière avec ce dernier, ledit tourillon (21, 22) présentant au moins un premier logement d'appui (26) dont la paroi forme la première face d'appui (26A).

7. Poignée pivotante selon la revendication 6 **caractérisée en ce que** ledit premier logement d'appui (26) forme une partie femelle dans laquelle la portion active (11) de la première clenche (25), elle-même logée initialement au sein de l'embase (3) et non du tourillon (21, 22), pénètre pour s'opposer au mouvement de rotation de l'organe de préhension (5) par rapport à l'embase (3), et dont ladite portion active (11) se retire pour libérer ledit mouvement de rotation.

8. Poignée pivotante selon la revendication 5 et l'une ou l'autre des revendications 6 et 7 **caractérisée en ce que** l'anse (6) est pourvue à chacune de ses extrémités (6A, 6B) d'un bossage destiné à former un tourillon (21, 22), chacun desdits tourillons (21, 22) coopérant respectivement avec la première et la seconde clenche (25, 30) qui contrôle sa mobilité.

9. Poignée pivotante selon l'une des revendications précédentes **caractérisée en ce que** la ou les clenches (25, 30) sont portées par un ou des coulisseaux (35, 36) guidés à translation dans l'embase de fixation (3).

10. Poignée pivotante selon l'une des revendications précédentes **caractérisée en ce que** la première et la seconde clenche (25, 30) sont formées par des lames (50) superposées en appui-plan glissant l'une contre l'autre.

11. Poignée pivotante selon l'une des revendications précédentes **caractérisée en ce que** la première et/ou la seconde trajectoire (T₂₅, T₃₀) sont soit sensiblement colinéaires à l'axe de basculement (XX'), soit sensiblement radiales par rapport à l'axe de basculement (XX').

12. Poignée pivotante selon les revendications 9 et 11 **caractérisée en ce que** la première et la seconde clenches (25, 30) sont formées par une première et une seconde protubérance portées par un même coulisseau (35), respectivement par une première et une seconde languettes (35A, 35B) sensiblement parallèles et maintenues l'une à l'autre, à distance l'une de l'autre, par une traverse (39), **en ce que** l'organe de préhension (5) présente au moins un premier et un second tourillon (21, 22) sensiblement coaxiaux par lesquels il s'articule sur l'embase (3), et **en ce que** lesdits tourillons (21, 22) présentent chacun d'une part un moyeu (40) évidé ménageant un logement de dégagement (70) dans lequel la première clenche (25), respectivement la seconde clenche (30), peut s'escamoter en position de libération, et d'autre part une jante (41) bordant ledit moyeu (40) et dans l'épaisseur de laquelle est creusé un logement d'appui (26, 31) offrant une surface d'appui (26A, 31A) à la clenche correspondante lorsque celle-ci s'y introduit en position d'engagement.

13. Poignée pivotante selon l'une des revendications précédentes **caractérisée en ce que** les moyens de retenue (10) permettent de verrouiller l'organe de préhension (5) dans sa première position angulaire et sont placés sous la dépendance d'un organe de commande (15) actionnable par l'utilisateur, distinct de l'organe de préhension (5), et commun à la première et à la seconde clenche (25, 30), l'organe de commande (15) comportant un bouton-poussoir (16) agencé pour se déplacer selon une direction sensiblement transverse à la première et/ou à la seconde trajectoire.

14. Poignée pivotante selon l'une des revendications 1 à 11 **caractérisée en ce que** la première et/ou la seconde face d'appui (26A) sont inclinées par rapport à la trajectoire de la première, respectivement de la seconde clenche (25, 30), de sorte à former des rampes de réarmement (60) commandées par l'organe de préhension (5) et permettant de repousser la première clenche (25), respectivement de la seconde clenche (30), vers sa position de libération lorsqu'un effort supérieur à un seuil prédéterminé est exercé sur ledit organe de préhension.

15. Récipient de cuisine (2) **caractérisé en ce qu'**il comporte au moins une poignée pivotante (1) selon l'une des revendications 1 à 14.

## Patentansprüche

1. Schwenkgriff (1) für einen Kochbehälter (2), wobei der Griff (1) einen Befestigungssockel (3), der es ermöglicht, den Griff an der Wand (4) des Behälters (2) zu befestigen, sowie ein Greifelement (5) umfasst, das auf dem Befestigungssockel montiert ist, so dass es im Wesentlichen um eine Schwenkachse (XX') alternativ von einer ersten Greifwinkelposition, in der es einem Benutzer möglich ist, den Behälter zu betätigen, in eine zweite Ruhewinkelposition, die zu der ersten Winkelposition unterschiedlich ist, und umgekehrt schwenken zu können, wobei der Griff mit Haltemitteln (10) versehen ist, die geeignet sind, sich dem Übergang des Greifelements (5) von der ersten Winkelposition in die zweite Winkelposition entgegenzustellen, wobei der Griff (1) **dadurch gekennzeichnet ist, dass** die Haltemittel mindestens eine erste Klinke (25) und eine zweite Klinke (30) umfassen, die derart ausgeführt sind, dass sie sich entlang einer ersten Bahn (T₂₅) und einer zweiten Bahn (T₃₀) zwischen einerseits einer Eingriffsposition, in der sie an einer ersten Stützfläche (26A) bzw. einer zweiten Stützfläche (31A) zur Anlage gelangen, von denen die eine und/oder die andere im Wesentlichen lateral zur ersten bzw. zweiten Bahn (T₂₅, T₃₀) angeordnet und voneinander entlang der Schwenkachse (XX') beabstandet sind, um sich der Verschiebung des Greifelements entgegenzustellen, und andererseits einer Freigabeposition verschieben können, in der die Klinken (25, 30) die erste und zweite Stützfläche (26A, 31A) freigeben, um die Verschiebung des Greifelements zu gestatten.

2. Schwenkgriff nach Anspruch 1, **dadurch gekennzeichnet, dass** für den Übergang von ihrer Freigabeposition in ihre Eingriffsposition oder umgekehrt sich die erste Klinke (25) und die zweite Klinke (30) zueinander in entgegengesetzte Richtungen verschieben.

3. Schwenkgriff nach Anspruch 2, **dadurch gekennzeichnet, dass** die erste Bahn und die zweite Bahn (T₂₅, T₃₀) im Wesentlichen parallel sind, wobei die erste Klinke (25) und die zweite Klinke (30) zueinander entgegengesetzt montiert sind.

4. Schwenkgriff einem der vorhergehenden Ansprüche, **dadurch gekennzeichnet, dass** die erste und die zweite Klinke (25, 30) in ihre Eingriffsposition durch ein gemeinsames elastisches Element (63), das zwischen der ersten und der zweiten Klinke (25, 30) angeordnet ist, gedrückt werden, um sie in einem Abstand zueinander zu zwingen.

5. Schwenkgriff nach einem der vorhergehenden Ansprüche, **dadurch gekennzeichnet, dass** das Greifelement (5) von einem Henkel (6) gebildet ist, der durch jedes der Enden (6A, 6B) mit dem Sockel (3) beiderseits dieses letztgenannten verbunden ist.

6. Schwenkgriff nach einem der vorhergehenden Ansprüche, **dadurch gekennzeichnet, dass** das Greifelemant (5) von dem Sockel (3) mit Hilfe mindestens eines Drehzapfens (21, 22) getragen wird, der das Schwenken des Greifelements (5) in Drehung ermöglicht, wobei der Drehzapfen (21, 22) mit dem Greifelement (5) verbunden und bevorzugt mit diesem letztgenannten aus einem Stück gebildet ist, wobei der Drehzapfen (21, 22) mindestens eine erste Stützlagerung (26) aufweist, deren Wand die erste Stützfläche (26A) bildet.

7. Schwenkgriff nach Anspruch 6, **dadurch gekennzeichnet, dass** die erste Stützlagerung (26) einen Aufnahmeteil bildet, in den der aktive Abschnitt (11) der ersten Klinke (25), die selbst ursprünglich in dem Sockel (3) und nicht im Drehzapfen (21, 22) gelagert ist, eindringt, um sich der Drehbewegung des Greifelements (5) in Bezug zum Sockel (3) entgegenzustellen, wobei sich der aktive Abschnitt (11) zurückzieht, um die Drehbewegung freizugeben.

8. Schwenkgriff nach Anspruch 5 und dem einen oder dem anderen der Ansprüche 6 und 7, **dadurch gekennzeichnet, dass** der Henkel (6) an jedem seiner Enden (6A, 6B) mit einer Erhöhung versehen ist, die dazu bestimmt ist, einen Drehzapfen (21, 22) zu bilden, wobei jeder der Drehzapfen (21, 22) mit der ersten bzw. der zweiten Klinke (25, 30) zusammenwirkt, die seine Beweglichkeit steuert.

9. Schwenkgriff nach einem der vorhergehenden Ansprüche, **dadurch gekennzeichnet, dass** die Klinke(n) (25, 30) von einem oder mehreren Gleitschiebern (35, 36) getragen werden, die in Translation in dem Befestigungssockel (3) geführt werden.

10. Schwenkgriff nach einem der vorhergehenden Ansprüche, **dadurch gekennzeichnet, dass** die erste und die zweite Klinke (25, 30) von übereinander angeordneten Blättchen (50) gebildet sind, die flach aufliegen und gegeneinander gleiten.

11. Schwenkgriff nach einem der vorhergehenden Ansprüche, **dadurch gekennzeichnet, dass** die erste und/oder die zweite Bahn (T₂₅, T₃₀) im Wesentlichen zur Schwenkachse (XX') kolinear, d.h. im Wesentlichen radial bezogen auf die Schwenkachse (XX') sind.

12. Schwenkgriff nach den Ansprüchen 9 und 11, **dadurch gekennzeichnet, dass** die erste und die zweite Klinke (25, 30) von einer ersten und einer zweiten Ausstülpung, die von demselben Gleitschieber (35) bzw, von einer ersten und einer zweiten Zunge (35A, 35B) getragen werden, die im Wesentlichen parallel sind und aneinander in einem Abstand zueinander von einer Querstrebe (39) gehalten werden, dass das Greifelement (5) mindestens einen ersten und einen zweiten Drehzapfen (21, 22) aufweist, die im Wesentlichen koaxial sind und durch die es am Sockel (3) angelenkt ist, und dass die Drehzapfen (21, 22) jeweils einerseits eine ausgenommene Nabe (40) aufweisen, die eine Aufnahmelagerung (70) bildet, in die sich die erste Klinke (25) bzw. die zweite Klinke (30) in Freigabeposition einziehen kann, und andererseits einen Kranz (41), der die Nabe (40) umgibt und in dessen Dicke eine Stützlagerung (26, 31) ausgehöhlt ist, die eine Stützfläche (26A, 31A) für die entsprechende Klinke bietet, wenn diese in die Eingriffsposition übergeht.

13. Schwenkgriff nach einem der vorhergehenden Ansprüche, **dadurch gekennzeichnet, dass** es die Haltemittel (10) ermöglichen, das Greifelement (5) in seiner ersten Winkelposition zu verriegeln, und in Abhängigkeit von einem vom Benutzer betätigbaren Steuerelement (15), das sich von dem Greifelement (5) unterscheidet und der ersten und der zweiten Klinke (25, 30) gemeinsam ist, anzuordnen, wobei das Steuerelement (15) einen Druckknopf (16) umfasst, der derart angeordnet ist, dass er sich in eine Richtung im Wesentlichen quer zur ersten und/oder zurzweiten Bahn verschiebt.

14. Schwenkgriff nach einem der Ansprüche 1 bis 11, **dadurch gekennzeichnet, dass** die erste und/oder die zweite Stützfläche (26A) zur Bahn der ersten bzw. der zweiten Klinke (25, 30) geneigt sind, so dass Rücksetzrampen (60) gebildet werden, die von dem Greifelement (5) gesteuert werden und es ermöglichen, die erste Klinke (25) bzw. die zweite Klinke (30) in ihre Freigabeposition zurückzuschieben, wenn eine Kraft größer als eine vorbestimmte Schwelle auf das Greifelement ausgeübt wird

15. Kochbehälter (2), **dadurch gekennzeichnet, dass** er mindestens einen Schwenkgriff (1) nach einem der Ansprüche 1 bis 14 umfasst.

## Claims

1. A pivotally-mounted handle (1) for a kitchen vessel (2), said handle (1) comprising a fastening base (3) making it possible to fasten said handle to the wall (4) of the vessel (2), and a graspable member (5) mounted on said fastening base so that it can pivot, substantially about a pivot axis (XX') in alternation from a graspable first angular position, in which it enables a user to manipulate the vessel, to a rest second angular position that is distinct from the first angular position, and vice versa, said handle being provided with retaining means (10) suitable for opposing movement of said graspable member (5) from the first angular position to the second angular position, said handle (1) being **characterized in that** the retaining means include at least a first latch-bolt (25) and a second latch-bolt (30) that are designed to be capable of moving respectively along a first path (T₂₅) and along a second path (T₃₀), between firstly an engagement position, in which said first and second latch-bolts come into abutment respectively against a first abutment face (26A) and against a second abutment face (31 A), one or both of said first and second abutment faces being disposed substantially laterally relative to a respective one of the first and second paths (T₂₅, T₃₀), and said first and second abutment faces being disposed at some distance from each other along the pivot axis (XX'), in order to oppose movement of the graspable member, and secondly a releasing position, in which said latch-bolts (25, 30) release said first and second abutment faces (26A, 31A) in order to allow the graspable member to move.

2. A pivotally-mounted handle according to claim 1, **characterized in that**, in order to go over from their releasing position to their engagement position, or vice versa, the first latch-bolt (25) and the second latch-bolt (30) move in opposite directions relative to each other.

3. A pivotally-mounted handle according to claim 2, **characterized in that** the first path and the second path (T₂₅, T₃₀) are substantially parallel, the first latch-bolt (25) and the second latch-bolt (30) being mounted in opposition relative to each other.

4. A pivotally-mounted handle according to any preceding claim, **characterized in that** the first and second latch-bolts (25, 30) are urged towards their engagement positions by a common resilient member (63) interposed between the first and second latch-bolts (25, 30) so as to constrain them to move apart from each other.

5. A pivotally-mounted handle according to any preceding claim, **characterized in that** the graspable member (5) is formed by a loop (6) being connected via each of said ends (6A, 6B) to the base (3), on either side of said base (3).

6. A pivotally-mounted handle according to any preceding claim, **characterized in that** the graspable member (5) is carried by the base (3) by means of at least one stub axle (21, 22) that enables said graspable member (5) to pivot in rotation, said first stub axle being secured to the base (3) and being preferably formed integrally therewith, the stub axle (21, 22) being provided with at least a first abutment recess (26), the wall of which forms the first abutment face (26A).

7. A pivotally-mounted handle according to claim 6, **characterized in that** the first abutment recess (26) forms a female portion into which an active portion (11) of the first latch-bolt (25), said first latch-bolt (25) being initially received in the base (3), and not in the stub axle (21, 22), penetrates in order to oppose movement in rotation of the graspable member (5) relative to the base (3), and from which said active portion (11) retracts in order to release such movement in rotation.

8. A pivotally-mounted handle according to claim 5 and one of claim 6 or 7, **characterized in that** the loop (6) is provided at each of its ends (6A, 6B) with a projection serving to form a stub axle (21, 22), in which arrangement the two stub axles (21, 22) co-operate respectively with the first latch-bolt (25) and with the second latch-bolt (30), which latch-bolts control the ability of the respective stub axles to move.

9. A pivotally-mounted handle according to any preceding claim, **characterized in that** the latch-bolt(s) (25, 30) are carried by one or more slides (35, 36) guided in translation in the fastening base (3).

10. A pivotally-mounted handle according to any preceding claim, **characterized in that** the first and second latch-bolts (25, 30) are formed by blades (50) superposed in slidably plane abutment against each other.

11. A pivotally-mounted handle according to any preceding claim, **characterized in that** the first path and/or the second path (T₂₅, T₃₀) are either substantially co-linear with the pivot axis (XX') or substantially radial relative to the pivot axis (XX').

12. A pivotally-mounted handle according to claims 9 and 11, **characterized in that** the first and second latch-bolts (25, 30) are formed by first and second protuberances carried by the same slide (35), respectively by first and second tongues (35A, 35B) that are substantially parallel and held relative to each other at some distance from each other by a cross-piece (39), **in that** the graspable member (5) has at least first and second stub axles (21, 22) that are substantially in alignment and via which it is hinged to the base (3), and **in that** each of said stub axles (21, 22) has firstly a recessed hub (40) forming a disengagement recess (70) into which the first latch-bolt (25), and respectively the second latch-bolt (30) can retract into the releasing position, and secondly a rim (41) edging said hub (40) and in the thickness of which an abutment recess (26, 31) is provided that offers an abutment surface (26A, 31A) to the corresponding latch-bolt when said latch-bolt is inserted therein in the engagement position.

13. A pivotally-mounted handle according to any preceding claim, **characterized in that** the retaining means (10) make it possible to lock the graspable member (5) in its first angular position and are placed under the dependence of a control member (15) actuatable by the user, distinct from the graspable member (5), and common to the first and second latch-bolts (25, 30), the control member (15) including a push-button (16) arranged to move in a direction that is substantially transverse to the first path and/or to the second path.

14. A pivotally-mounted handle according to any one of claims 1 to 11, **characterized in that** the first abutment face and/or the second abutment face (26A) are inclined relative to the path of the first latch-bolt (25) or respectively of the second latch-bolt (30), so as to form reloading ramps (60) controlled by the graspable member (5) and making it possible to push the first latch-bolt (25), or respectively the second latch-bolt (30), towards its releasing position when a force greater than a predetermined threshold is exerted on said graspable member.

15. A kitchen vessel (2), **characterized in that** it includes at least one pivotally-mounted handle (1) according to any one of claims 1 to 14.
